# EUROPÄISCHE PATENTSCHRIFT

(11) **EP 3 321 150 B1**
(45) Veröffentlichungstag und Bekanntmachung des Hinweises auf die Patenterteilung: **17.06.2020**
(21) Anmeldenummer: 17198443.8
(22) Anmeldetag: 26.10.2017
(51) Int. Cl.: B62D 15/02

(54) **VERFAHREN ZUM ZUMINDEST SEMI-AUTONOMEN EINPARKEN EINES KRAFTFAHRZEUGS IN EINE PARKLÜCKE, FAHRERASSISTENZSYSTEM UND KRAFTFAHRZEUG**
METHOD FOR AT LEAST SEMI-AUTONOMOUS PARKING OF A MOTOR VEHICLE IN A PARKING SPACE, DRIVER ASSISTANCE SYSTEM AND MOTOR VEHICLE
PROCÉDÉ DESTINÉ AU MOINS AU STATIONNEMENT SEMI-AUTOMATIQUE D'UN VÉHICULE AUTOMOBILE DANS UNE PLACE DE STATIONNEMENT, SYSTÈME D'ASSISTANCE AU CONDUCTEUR ET VÉHICULE AUTOMOBILE

(30) Priorität: 11.11.2016 DE 102016121632
(43) Veröffentlichungstag der Anmeldung: 16.05.2018
(73) Patentinhaber: Valeo Schalter und Sensoren GmbH, 74321 Bietigheim-Bissingen (DE)
(72) Erfinder: Heimberger, Marco, 74321 Bietigheim-Bissingen (DE); Bensemann, Rolf, 74321 Bietigheim-Bissingen (DE); Lenk, Dominik, 74321 Bietigheim-Bissingen (DE); Joos, Malte, 74321 Bietigheim-Bissingen (DE); Mahmoud, Mohamed, 74321 Bietigheim-Bissingen (DE); Koudijs, Gerald, 74321 Bietigheim-Bissingen (DE); Fuchs, Fabian, 74321 Bietigheim-Bissingen (DE); Borrmann, Urs, 74321 Bietigheim-Bissingen (DE); Blinkle, Frank, 74321 Bietigheim-Bissingen (DE)
(74) Vertreter: Pothmann, Karsten

(56) Entgegenhaltungen:
- DE-A1-102010 047 958
- DE-A1-102013 225 725

## Beschreibung

Die Erfindung betrifft ein Verfahren zum zumindest semi-autonomen Einparken eines Kraftfahrzeugs in eine Parklücke, wobei das Kraftfahrzeug zwei durch eine Hinterachslenkung des Kraftfahrzeugs lenkbare Hinterräder und zwei lenkbare Vorderräder aufweist, wobei bei dem Verfahren ausgehend von einer Startposition des Kraftfahrzeugs eine Einparktrajektorie bestimmt wird, die zumindest einen ersten Abschnitt, welcher die Startposition umfasst, und einen sich an den ersten Abschnitt unmittelbar anschließenden zweiten Abschnitt aufweist, wobei während des Einparkens die Hinterachslenkung einen Lenkwinkel an den Hinterrädern einstellt, bevor das Kraftfahrzeug den zweiten Abschnitt erreicht. Die Erfindung betrifft außerdem ein Fahrerassistenzsystem sowie ein Kraftfahrzeug mit einem Fahrerassistenzsystem.

Es ist bereits aus dem Stand der Technik bekannt, Kraftfahrzeuge zumindest semi-autonom zu manövrieren, um sie beispielsweise in eine Parklücke einzuparken. Beim semi-autonomen Manövrieren übernimmt ein Fahrerassistenzsystem des Kraftfahrzeugs eine Lenkung des Kraftfahrzeugs, während ein Fahrer des Kraftfahrzeugs das Gaspedal sowie die Bremse des Kraftfahrzeugs betätigt. Beim autonomen beziehungsweise vollautonomen Manövrieren betätigt das Fahrerassistenzsystem zusätzlich zu der Lenkung auch das Gaspedal und die Bremse, sodass das Kraftfahrzeug automatisch gelenkt, beschleunigt und abgebremst wird. Zum Bereitstellen eines zumindest semi-autonomen Einparkmanövers weisen solche Fahrerassistenzsysteme üblicherweise Sensoren auf, welche Parklücken beziehungsweise freie Stellplätze in einem Umgebungsbereich des Kraftfahrzeugs erkennen und vermessen können.

Weiterhin, wie aus dem Stand der Technik bekannt, kann bei Kraftfahrzeugen, die eine Hinterachslenkung aufweisen, neben der Vorderachse auch die Hinterachse des Kraftfahrzeugs gelenkt werden. Dies kann auch als Hinterradlenkung oder als Allradlenkung bezeichnet werden. Gerade bei Einparkmanövern bringt eine zusätzliche Hinterachslenkung mehr Flexibilität mit sich. Allerdings gestaltet sich durch die zusätzliche Hinterachslenkung die Bewegungsplanung und -regelung deutlich komplizierter.

Die DE 10 2007 037 645 A1 beschreibt ein Kraftfahrzeug mit lenkbaren Vorder- und Hinterrädern, wobei für einen Rückwärtseinparkvorgang eine Abweichung des Ist-Lenkwinkels von einem, bezogen auf eine ermittelte Soll-Einparktrajektorie, bestimmten Soll-Lenkwinkel ermittelbar und die Hinterräder in Abhängigkeit von der ermittelten Abweichung zur zumindest teilweisen Korrektur der Abweichung auslenkbar sind. Bei diesem Kraftfahrzeug lenkt der Fahrer während des Rückwärtseinparkvorgangs jedoch nach wie vor selbst und übernimmt aktiv die Wegsteuerung. Hierbei kommt die Hinterradlenkung zum Einsatz, um die durch die Fahrervorgabe bedingten Abweichungen von einer Soll-Trajektorie zumindest teilweise kompensieren zu können.

Die DE 10 2013 225 725 A1 beschreibt ein Einparkhilfesystem, bei welchem in zumindest einem Teilabschnitt einer Einparktrajektorie die Vorder- und Hinterräder gleichsinnig eingestellt sind. Insbesondere werden hierbei entlang eines ersten Streckenabschnitts gegensinnige Lenkwinkel der Vorderräder und Hinterräder eingestellt, während entlang zumindest eines Teilabschnitts eines zweiten Streckenabschnitts die Lenkwinkel der Vorderräder und Hinterräder gleichsinnig eingestellt sind. Dieses Verfahren wird dabei beim Einparken in eine Querparklücke angewandt. Hierbei sind also während des gesamten Einparkmanövers die Hinterräder ausgelenkt. Hierdurch wird die Bewegungsplanung und -regelung deutlich komplizierter.

DE 10 2010 047 958A1 ist als nächstliegender Stand der Technik nach dem Oberbegriff des Anspruchs 1 zu sehen und beschreibt ein Rückwärtseinparken eines Fahrzeugs zwischen einem ersten Objekt und einem zweiten Objekt in Ansprechen auf eine dazwischen verfügbare Einparkdistanz. Das Fahrzeug umfasst lenkbare Vorderräder und lenkbare Hinterräder. Eine Distanz zwischen dem ersten Objekt und dem zweiten Objekt wird aus der Ferne erfasst, welche bestimmt, ob eine Einparkstrategie mit einem Zug oder mit zwei Zügen angewendet werden soll. Eine autonome Einparkstrategie mit einem Zug umfasst, dass die lenkbaren Vorder- und Hinterräder in jeweilige Richtungen gedreht werden, um das Fahrzeug auf einem ersten bogenförmigen Rückwärtsfahrweg zu lenken und dass die lenkbaren Räder gemeinsam in eine Gegenrichtung gedreht werden, um das Fahrzeug auf einem zweiten bogenförmigen Rückwärtsfahrweg in eine Einparkendposition zu lenken. Die autonome Einparkstrategie mit zwei Zügen umfasst, dass das Einparkmanöver mit einem Zug ausgeführt wird und dann ein Getriebegang in einen Fahrgang gewechselt wird und die lenkbaren Vorder- und Hinterräder in die erste Richtung gedreht werden, um das Fahrzeug vorwärts in eine Einparkendposition zu bewegen.

Zudem bleibt hier ein Einparkvorgang mit mehreren Zügen, bei welchem also zwischen Vorwärtsrichtung und Rückwärtsrichtung gewechselt wird beziehungsweise ein Gangwechsel zwischen Vorwärtsgang und Rückwärtsgang stattfindet, unberücksichtigt. Bei derartigen Einparkvorgängen ergeben sich zusätzliche Probleme, die gerade bei der Verwendung einer Hinterachslenkung berücksichtigt werden müssen. Insbesondere ist meist bauteilschutzbedingt keine Auslenkung der Hinterräder im Stillstand erlaubt, sodass beispielsweise die Standzeit zwischen zwei Zügen nicht zur Auslenkung der Hinterräder genutzt werden kann. Soll ein Auslenken der Hinterräder beispielsweise erst sehr spät während des Einparkvorgangs stattfinden, beispielsweise lediglich für Korrekturzüge, so stellt sich weiterhin das Problem, dass die Hinterachslenkung sehr lange braucht, um einen bestimmten Winkel einzunehmen, was solche Korrekturzüge aufgrund ihrer Kürze wenig effektiv gestaltet. Dies ist besonders dann der Fall, wenn manuell Gas gegeben wird.

Daher ist es Aufgabe der vorliegenden Erfindung, ein Verfahren zum zumindest semi-autonomen Einparken eines Kraftfahrzeugs in eine Parklücke sowie ein Fahrerassistenzsystem und ein Kraftfahrzeug mit einem Fahrerassistenzsystem bereitzustellen, mittels welchem sich das semi-autonome oder vollautonome Einparken eines Kraftfahrzeugs in eine Parklücke effektiver oder einfacher gestalten lässt.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst. Vorteilhafte Ausgestaltungen der Erfindung sind in den abhängigen Ansprüchen angegeben, sowie der Beschreibung und den Figuren zu entnehmen.

Beim erfindungsgemäßen Verfahren zum zumindest semi-autonomen Einparken eines Kraftfahrzeugs in eine Parklücke, wobei das Kraftfahrzeug zwei durch eine Hinterachslenkung des Kraftfahrzeugs lenkbare Hinterräder und zwei lenkbare Vorderräder aufweist, wird ausgehend von einer Startposition des Kraftfahrzeugs eine Einparktrajektorie bestimmt, die zumindest einen ersten Abschnitt, welcher die Startposition umfasst, und einen sich an den ersten Abschnitt unmittelbar anschließenden zweiten Abschnitt aufweist, wobei während des Einparkens die Hinterachslenkung einen Lenkwinkel an den Hinterrädern einstellt, bevor das Kraftfahrzeug den zweiten Abschnitt erreicht. Weiterhin wird eine erste Zwischenposition des Kraftfahrzeugs auf der Einparktrajektorie bestimmt, die ein Ende des ersten Abschnitts der Einparktrajektorie und einen Beginn des zweiten Abschnitts festlegt. Weiterhin wird ein Soll-Lenkwinkel der Hinterräder für die erste Zwischenposition bestimmt und die Hinterachslenkung stellt den Lenkwinkel an den Hinterrädern während des Einparkens vor Erreichen der ersten Zwischenposition auf den Soll-Lenkwinkel ein.Dabei lenkt die Hinterachslenkung die Hinterräder während des Führens des Fahrzeugs entlang eines ersten Teilabschnitts des ersten Abschnitts von der Startposition bis zu einer zweiten Zwischenposition zumindest nicht gleichsinnig zu den Vorderrädern aus, und während des Führens des Kraftfahrzeugs auf einem zweiten Teilabschnitt des ersten Abschnitts lenkt die Hinterachslenkung die Hinterräder aus, insbesondere gleichsinnig zu den Vorderrädern bzw. zum Einstellen des gleichsinnig zu den Vorderrädern ausgerichteten Soll-Lenkwinkels. Weiterhin wird eine Weglänge bestimmt, die die zweite Zwischenposition festlegt, sodass die Länge der Einparktrajektorie von der zweiten Zwischenposition bis zur ersten Zwischenposition die Weglänge darstellt, wobei während des Einparkens ein Auslenken der Hinterräder, insbesondere aus ihrer Nullstellung oder aus jeder beliebigen aber zu den Vorderrädern gegensinnig eingestellten Stellung, zum Einstellen des Soll-Lenkwinkels ab Erreichen der zweiten Zwischenposition gestartet wird. Ferner wird auch eine Zeitdauer bestimmt, die einen bestimmten Zeitpunkt vor dem Erreichen der ersten Zwischenposition festlegt, wenn das Kraftfahrzeug entlang der Einparktrajektorie geführt wird, sodass eine Dauer ab dem bestimmten Zeitpunkt bis zum Erreichen der ersten Zwischenposition durch das Kraftfahrzeug die bestimmte Zeitdauer darstellt, wobei während des Einparkens ein Auslenken der Hinterräder zum Einstellen des Soll-Lenkwinkels zu dem bestimmten Zeitpunkt gestartet wird.

Hierdurch wird es vorteilhafterweise ermöglicht, dass ein an einer bestimmten Position, nämlich der ersten Zwischenposition, geplanter idealer Lenkwinkel für die Hinterräder bereits vor Erreichen dieser ersten Zwischenposition eingestellt werden kann. Auch für den Fall, dass dieser zweite Abschnitt der Einparktrajektorie sehr kurz ist, wird durch die Erfindung dennoch ein besonders effektives Manövrieren des Kraftfahrzeugs auf diesem zweiten Abschnitt ermöglicht, ohne dass eine sehr langsame Hinterachslenkung diese Effektivität reduziert, da die Hinterräder bereits bei Erreichen der ersten Zwischenposition im Idealwinkel für das auf dem zweiten Abschnitt durchzuführende Manöver, zum Beispiel einem Dackellauf, bei welchem die Vorder- und Hinterräder gleichsinnig lenken, eingestellt werden können. Ein weiterer besonders großer Vorteil der Erfindung besteht zudem darin, dass mit dem Auslenken der Hinterräder zum Einstellen des Soll-Winkels sehr kurz vor Erreichen der ersten Zwischenposition begonnen werden kann und ein Auslenken der Hinterräder, insbesondere ein zu den Vorderrädern gleichsinniges Auslenken der Hinterräder, nicht auf der gesamten Einparktrajektorie erforderlich ist, insbesondere nicht auf dem gesamten ersten Abschnitt. Dadurch können die Bewegungsplanung und -regelung deutlich vereinfacht werden. Insbesondere kann so für den Großteil des ersten Abschnitts auf eine Standard-Regelung der Hinterräder zurückgegriffen werden, bei welcher also die Hinterräder gar nicht ausgelenkt werden oder die Hinterräder gegensinnig zu den Vorderrädern ausgelenkt werden. Besonders große Vorteile lassen sich entsprechend dann erzielen, wenn die Hinterachslenkung im Wesentlichen lediglich für Korrekturzüge am Ende der geplanten Einparktrajektorie verwendet werden soll. Dies führt zu einer deutlichen Vereinfachung der Bewegungsplanung trotz Verwendung der Hinterachslenkung und bietet deutlich mehr Flexibilität und Effektivität durch die Hinterachslenkung gerade bei kurzen Abschnitten, wie Korrekturzügen. Die Bestimmung des Soll-Lenkwinkels für die erste Zwischenposition kann zudem vorteilhafterweise in Abhängigkeit von einer erfassten Geometrie der Parklücke erfolgen. Der Soll-Lenkwinkel entspricht dann einem für den in Abhängigkeit von der ermittelten Geometrie berechneten Bahnverlauf auf dem zweiten Abschnitt optimalen Lenkwinkel der Hinterräder, um einen möglichst einfachen Einparkvorgang zu ermöglichen. Vor allem dann, wenn sich das Kraftfahrzeug an der ersten Zwischenposition zumindest kurzzeitig im Stillstand befindet, beispielsweise wenn ein Wechsel zwischen einer Vorwärts- und Rückwärtsrichtung des Kraftfahrzeugs vorgesehen ist, ist dieses Verfahren besonders von Vorteil, da gerade im Stillstand oftmals ein Auslenken der Hinterräder nicht möglich ist, und durch dieses Verfahren die Hinterräder bereits schon vorher auf ihren Soll-Lenkwinkel eingestellt werden können. Dabei lenkt die Hinterachslenkung die Hinterräder während des Führens des Fahrzeugs entlang eines ersten Teilabschnitts des ersten Abschnitts von der Startposition bis zu einer zweiten Zwischenposition zumindest nicht gleichsinnig zu den Vorderrädern aus, und während des Führens des Kraftfahrzeugs auf einem zweiten Teilabschnitt des ersten Abschnitts lenkt die Hinterachslenkung die Hinterräder aus, insbesondere gleichsinnig zu den Vorderrädern bzw. zum Einstellen des gleichsinnig zu den Vorderrädern ausgerichteten Soll-Lenkwinkels. Dies ermöglicht es vorteilhafterweise, erst kurz vor Erreichen der ersten Zwischenposition die Auslenkung der Hinterräder zum Einstellen des Soll-Lenkwinkels zu initiieren, was die gesamte Bewegungsplanung deutlich vereinfacht. Vor Erreichen der ersten Zwischenposition können sich die Hinterräder dabei permanent in einer nicht ausgelenkten Position, das heißt in ihrer Nullstellung, befinden, oder sie können auch gegensinnig zu den Vorderrädern ausgelenkt sein. Mit anderen Worten wird der Dackellauf erst ab Erreichen der ersten Zwischenposition gestartet. Gleichzeitig wird wiederum bewerkstelligt, dass die Hinterräder an der ersten Zwischenposition bereits den für das nachfolgende Manöver idealen Lenkwinkel aufweisen, sodass das nachfolgende Manöver nicht durch eine langsame und träge Hinterachslenkung negativ beeinflusst wird. Da es aufgrund dieser Bewegungsplanungsvereinfachung, gerade hinsichtlich des ersten Abschnitts, sehr vorteilhaft ist, diese zweite Zwischenposition möglichst kurz vor der ersten Zwischenposition zu wählen und damit ein Auslenken der Hinterräder zum Einstellen des Soll-Lenkwinkels erst kurz vor Erreichen der ersten Zwischenposition zu initiieren, sind die nachfolgenden Ausführungsformen besonders vorteilhaft.

Weiterhin wird eine Weglänge bestimmt, die die zweite Zwischenposition festlegt, sodass die Länge der Einparktrajektorie von der zweiten Zwischenposition bis zur ersten Zwischenposition die Weglänge darstellt, wobei während des Einparkens ein Auslenken der Hinterräder, insbesondere aus ihrer Nullstellung oder aus jeder beliebigen aber zu den Vorderrädern gegensinnig eingestellten Stellung, zum Einstellen des Soll-Lenkwinkels ab Erreichen der zweiten Zwischenposition gestartet wird. Hierdurch gestaltet sich die Berechnung und Planung der Einparktrajektorie bis zu dieser zweiten Zwischenposition besonders einfach. Wie diese Weglänge besonders vorteilhaft bestimmt werden kann, wird nachfolgen noch erläutert.

Ferner wird auch eine Zeitdauer bestimmt, die einen bestimmten Zeitpunkt vor dem Erreichen der ersten Zwischenposition festlegt, wenn das Kraftfahrzeug entlang der Einparktrajektorie geführt wird, sodass eine Dauer ab dem bestimmten Zeitpunkt bis zum Erreichen der ersten Zwischenposition durch das Kraftfahrzeug die bestimmte Zeitdauer darstellt, wobei während des Einparkens ein Auslenken der Hinterräder zum Einstellen des Soll-Lenkwinkels zu dem bestimmten Zeitpunkt gestartet wird. Als Beispiel kann festgelegt werden, dass das Auslenken der Hinterräder erst eine Sekunde vor Erreichen der ersten Zwischenposition gestartet wird. Der Zeitpunkt des Startens kann aufgrund der berechneten Einparktrajektorie und der bekannten Kraftfahrzeuggeschwindigkeit sehr einfach bestimmt werden. Vorteilhafterweise werden sowohl die bestimmte Weglänge als auch die bestimmte Zeitdauer so bemessen, dass ein Auslenken der Hinterräder aus ihrer aktuellen Stellung bis zum vorbestimmten Vollwinkel während dieser Weglänge beziehungsweise Zeitdauer möglich ist. Ist also diese Mindestweglänge beziehungsweise Mindestzeitdauer bekannt, so ist es vorteilhaft, wenn die Weglänge sowie alternativ die Zeitdauer so bestimmt werden, dass diese sehr nahe an dieser Mindestzeitdauer beziehungsweise Mindestweglänge liegen, um erst möglichst kurz vor Erreichen der ersten Zwischenposition die Auslenkung der Hinterräder zu initiieren.

Daher stellt es eine vorteilhafte Ausgestaltung der Erfindung dar, dass an der ersten Zwischenposition zwischen einer Vorwärtsfahrt des Kraftfahrzeugs und einer Rückwärtsfahrt des Kraftfahrzeugs gewechselt wird, insbesondere durch einen Gangwechsel zwischen einem Vorwärtsgang des Kraftfahrzeugs und einem Rückwärtsgang des Kraftfahrzeugs. Hierbei ist die Reihenfolge des Wechsels, das heißt ob von einer Vorwärtsfahrt zu einer Rückwärtsfahrt oder von einer Rückwärtsfahrt zu einer Vorwärtsfahrt gewechselt wird, unerheblich. Auch kann der Gangwechsel automatisch oder manuell durch den Fahrer erfolgen. Die Tatsache, dass unter Umständen ein Auslenken der Hinterräder während des Stillstands unzulässig ist, wirkt sich hierbei nun nicht mehr nachteilig auf die Effektivität des Fahrmanövers aus, da die Hinterräder bei Erreichen der ersten Zwischenposition bereits auf den gewünschten Idealwinkel, das heißt den Soll-Lenkwinkel, eingestellt sind. In diesem Fall stellen also der erste Abschnitt und der zweite Abschnitt zwei Züge der Einparktrajektorie dar, das heißt zwischen den beiden Zügen findet ein Gangwechsel zwischen einem Vorwärtsgang und einem Rückwärtsgang, unabhängig von der Reihenfolge, statt. Ein Wechsel zwischen der Vorwärtsrichtung und der Rückwärtsrichtung, der nachfolgen auch einfach als Fahrtrichtungswechsel bezeichnet wird, ist oft bei Korrekturzügen der Fall, bei welchen sich also beispielsweise das Kraftfahrzeug zumindest bereits zum Teil in der Parklücke befindet und dann noch richtig ausgerichtet wird. Hierdurch lässt sich das Verfahren besonders vorteilhaft auch zum Einparken in eine Längsparklücke nutzen, bei welchem beispielsweise erst rückwärts in die Parklücke eingefahren wird und sich dann ein Korrekturzug in Vorwärtsrichtung zum Ausrichten des Kraftfahrzeugs anschließt. In gleicher Weise vorteilhaft kann dieses Verfahren zum Vorwärtseinparken in zwei Zügen in eine Querparklücke genutzt werden. Hierbei kann das Kraftfahrzeug, welches sich in der Startposition beispielsweise im Wesentlichen senkrecht zur Parklücke und mit dem Heck der Parklücke zugewandt befindet, zunächst so geführt werden, dass es in Rückwärtsrichtung sich von der Parklücke entfernend zurücksetzt und dann vorwärts in die Querparklücke einparkt.

Bei einer weiteren vorteilhaften Ausgestaltung der Erfindung wird während des Einparkens und während einer Fahrt des Kraftfahrzeugs entlang des zweiten Abschnitts ein zum Lenkwinkel an den Hinterrädern gleichsinniger Lenkwinkel an den Vorderrädern, insbesondere zum Ausrichten des Kraftfahrzeugs, eingestellt. Ein derartiges gleichsinniges Lenken der Vorder- und Hinterräder wird üblicherweise auch als sogenannter Dackellauf bezeichnet. Weisen beispielsweise Hinterräder und Vorderräder den gleichen Lenkwinkel auf, so lässt sich dadurch beispielsweise eine rein translatorische Bewegung des Kraftfahrzeugs, ohne Überlagerung einer rotatorischen Bewegung, bereitstellen. Sind die Lenkwinkel an den Vorder- und Hinterrädern ungleich, so wird der translatorischen Bewegung noch eine rotatorische Bewegung überlagert. Der besonders große Vorteil bei einem solchen Dackellauf ist, dass sich dadurch ein seitlicher Versatz des Kraftfahrzeugs, das heißt in Richtung der Querachse des Kraftfahrzeugs, bewerkstelligen lässt, was besonders vorteilhaft zum Ausrichten des Kraftfahrzeugs in Bezug auf die Parklücke genutzt werden kann. Hierdurch können Einparkmanöver deutlich enger geplant werden. Zum Beispiel im Falle des Einparkens in eine Längsparklücke wird dadurch ein Einparken in eine deutlich kürzere Lücke ermöglicht. Auch Abweichungen von der geplanten Einparktrajektorie lassen sich dadurch besonders effektiv beheben. In diesem Zusammenhang ist es auch denkbar, dass im Verlauf des Einparkvorgangs eine Neuberechnung der Einparktrajektorie erfolgt, welche eine Verschiebung der Zielposition zur Folge hat. Dies ist dadurch bedingt, dass, wenn das Kraftfahrzeug zur Detektion einer Parklücke an einer solchen vorbeifährt, durch Kraftfahrzeugsensoren zunächst eine relativ grobe Vermessung dieser Parklücke erfolgt, denn beim Vorbeifahren lässt sich üblicherweise die Parklücke bzw. ihre genaue Geometrie nicht vollständig oder exakt erfassen. Auf Basis einer solchen Erstmessung wird dann eine erste Einparktrajektorie berechnet, auf welcher das Kraftfahrzeug bis zum Erreichen einer Zielposition geführt werden soll. Während das Kraftfahrzeug dann auf dieser ersten Einparktrajektorie geführt wird, erfolgen, zum Beispiel fortwährend, Neuvermessungen der Umgebung und der Parklücke durch die Kraftfahrzeugsensoren. Da sich beim Einparkvorgang das Kraftfahrzeug an die Parklücke annähert und letztendlich in diese einfährt ist auch im Zuge des Einparkvorgangs eine immer genauere und vervollständigende Vermessung der Parklücke möglich. Ergibt sich dabei beispielsweise, dass die in solchen nachfolgenden Vermessungen berechnete Geometrie der Parklücke zu stark von der eingangs berechneten Geometrie abweicht, so erfolgt eine Neuberechnung der Einparktrajektorie ausgehend vom aktuellen Standort des Kraftfahrzeugs, was zur Folge haben kann, dass sich auch die Zielposition ändert.

Besonders einfach gestaltet sich die Berechnung der Einparktrajektorie vor allem dann, wenn die an den Hinterrädern und an den Vorderrädern jeweils eingestellten Lenkwinkel nicht nur gleichsinnig sondern, zumindest innerhalb eines vorbestimmbaren Toleranzbereichs, auch gleich sind. Hierdurch kann wie oben beschreiben eine rein translatorische Bewegung umgesetzt werden.

Bei einer weiteren vorteilhaften Ausgestaltung der Erfindung wird im Falle einer Abweichung des Kraftfahrzeugs von der Einparktrajektorie während einer Fahrt des Kraftfahrzeugs entlang des ersten Abschnitts die Abweichung durch eine Regelung des Lenkwinkels an den Vorderrädern zumindest reduziert, und vorzugsweise auch vollständig kompensiert. Diese Regelung kann dabei in Abhängigkeit von der erfassten Abweichung von der Einparktrajektorie erfolgen. Eine derartige Abweichung kann beispielsweise durch eine Differenz zwischen einem Soll-Lenkwinkel und einem Ist-Lenkwinkel an den Hinterrädern aufgrund der langsamen und trägen Hinterachslenkung bedingt sein. Zudem wird vorteilhafterweise auch eine Kompensation, das heißt ein Ausregeln, der bei Annäherung des Kraftfahrzeugs an die erste Zwischenposition zunehmenden Hinterachseinlenkung über die Vorderachslenkung, ermöglicht.

Wie bereits erwähnt, lassen sich das erfindungsgemäße Verfahren und seine Ausgestaltungen vorteilhafterweise für vielfältige unterschiedliche Einparkmanöver verwenden. Daher stellt es eine besonders vorteilhafte Ausgestaltung der Erfindung dar, dass das Kraftfahrzeug beim Einparken in eine Längsparklücke eingeparkt wird. Beim Einparken in eine Längsparklücke ergeben sich gleich mehrere Vorteile. Gerade bei Längsparklücken eignet sich besonders vorteilhafterweise der beschriebene Dackellauf, um dann, wenn das Kraftfahrzeug bereits an eine Position, das heißt die erste Zwischenposition, geführt wurde, in welcher das Kraftfahrzeug im Wesentlichen bereits parallel zur Längsparklücke ausgerichtet ist, das Kraftfahrzeug quasi translatorisch in die Längsparklücke zu bewegen. Durch eine derartige Bewegung kann in deutlich kürzere Längsparklücken eingeparkt werden. Da ein derartiger Korrekturzug, der auf dem zweiten Abschnitt der Einparktrajektorie stattfindet, üblicherweise sehr kurz ist, wird es durch die Erfindung dennoch ermöglicht, diesen besonders effektiv auszuführen, beispielsweise durch maximal ausgelenkte Hinterräder, während diese diesen maximalen Soll-Lenkwinkel bereits aufweisen, wenn das Kraftfahrzeug die erste Zwischenposition erreicht.

Bei einer weiteren vorteilhaften Ausgestaltung der Erfindung wird das Kraftfahrzeug beim Einparken in einer Querparklücke rückwärts eingeparkt. Vorzugsweise findet dieses Einparkmanöver in einem Zug statt. Auch hier kann der Dackellauf besonders effektiv auf dem zweiten Abschnitt der Einparktrajektorie genutzt werden, um das Kraftfahrzeug, wenn dieses sich bereits zum Teil in der Querparklücke befindet, deutlich einfacher und besser ausrichten zu können. In diesem Fall ist die erste Zwischenposition vorzugsweise derart bestimmt, dass sich das Kraftfahrzeug, wenn es sich an der ersten Zwischenposition befindet, bereits zum Teil in der Querparklücke ist. Die Position des Kraftfahrzeugs in Bezug auf die Einparktrajektorie kann anhand eines vorbestimmten Referenzpunkts des Kraftfahrzeugs, wie beispielsweise der Mittelpunkt der Hinterachse, festgelegt werden. Die erste Zwischenposition kann sich in diesem Fall also beispielsweise noch außerhalb der Parklücke befinden, wobei lediglich das Heck des Fahrzeugs zum Teil in die Parklücke hinein ragt. Durch den Dackellauf lässt sich das Kraftfahrzeug dann auf einer besonders einfachen und vorteilhaften Trajektorie in die Parklücke hinein bewegen, wobei es durch das erfindungsgemäße Verfahren ermöglicht wird, dass der für diese letzte Bewegung ideale, an den Hinterrädern einzustellende Lenkwinkel, das heißt der Soll-Lenkwinkel, für die erste Zwischenposition, bereits wiederum eingestellt ist, bevor das Kraftfahrzeug die erste Zwischenposition erreicht.

Bei einer weiteren vorteilhaften Ausgestaltung der Erfindung wird das Kraftfahrzeug beim Einparken in eine Querparklücke vorwärts eingeparkt. Dieses Einparkmanöver kann dabei ebenfalls in zwei Zügen durchgeführt werden, wobei der erste Zug ganz normal geplant werden kann, jedoch am Ende des ersten Zugs, das heißt am Ende des ersten Abschnitts, bereits die Hinterachslenkung die Hinterräder auslenkt, um sie in die Wunschposition für den zweiten Zug zum Einfahren in die Querparklücke zu bringen. Auch hierdurch lässt sich der Dackellauf besonders vorteilhafterweise auf dem zweiten Abschnitt verwenden, um einen mehr oder weniger größeren seitlichen Versatz des Kraftfahrzeugs in Bezug zur Querparklücke auf deutlich flexiblere Weise ausgleichen zu können und das Kraftfahrzeug deutlich einfacher in Bezug auf die Querparklücke ausrichten zu können.

Ein Vorwärtseinparkmanöver in eine Querparklücke kann jedoch auch in einem Zug ausgeführt werden, je nach Startposition des Kraftfahrzeugs. Hierdurch ergeben sich weitere große Vorteile durch die Erfindung. Dabei ist es insbesondere vorteilhaft, wenn gemäß einem weiteren Ausführungsbeispiel der Erfindung das Kraftfahrzeug beim Einparken in die Querparklücke ohne einen Wechsel an der ersten Zwischenposition zwischen einer Vorwärtsfahrt des Kraftfahrzeugs und einer Rückwärtsfahrt des Kraftfahrzeugs vorwärts eingeparkt wird, wobei die Hinterachslenkung das Auslenken der Hinterräder in der Startposition des Kraftfahrzeugs initiiert. Hierdurch kann vorteilhafterweise die Hinterachslenkung die Hinterräder möglichst schnell auf den Soll-Lenkwinkel einstellen und wiederum der Dackellauf zum korrekten Ausrichten des Kraftfahrzeugs in Bezug zur Querparklücke zum Einsatz kommen, wodurch ein besonders einfaches Einparken des Kraftfahrzeugs in die Querparklücke ermöglicht wird.

Dabei stellt es eine besonders vorteilhafte Ausgestaltung der Erfindung dar, wenn die Zeitdauer bzw. die Weglänge in Abhängigkeit von einer gegebenen dynamischen Eigenschaft der Hinterachslenkung bestimmt wird. Derartige dynamische Eigenschaften können beispielsweise die Lenksystemgeschwindigkeit des die Hinterachslenkung umfassenden Lenksystems des Kraftfahrzeugs beziehungsweise die Geschwindigkeit der Hinterachslenkung oder deren Verzögerung darstellen. Unterschiedliche Lenksysteme sind durch unterschiedliches dynamisches Verhalten geprägt. So sind manche Lenksysteme in der Lage, deutlich schneller eine Lenkwinkeländerung des Lenkwinkels der Hinterräder zu bewerkstelligen als andere. Die Eigenschaften des Hinterachslenksystems können dabei vorgegeben sein und anhand dieser Eigenschaften kann vorteilhafterweise die Zeit berechnet werden, die die Hinterachslenkung für die Einstellung des Soll-Lenkwinkels aus der aktuellen Stellung der Hinterräder, zum Beispiel der Nullstellung oder jeder beliebigen aber zu den Vorderrädern gegensinnig eingestellten Stellung, benötigt. Entsprechend kann diese Zeit bei gegebener Geschwindigkeit des Kraftfahrzeugs auch in eine entsprechende Weglänge umgerechnet werden.

Ein weiterer Einflussfaktor für diese Mindestzeitdauer ist auch die Größe des bestimmten Soll-Lenkwinkels an sich. Soll also ein größerer Lenkwinkel an den Hinterrädern eingestellt werden, so benötigt die Hinterachslenkung dafür auch mehr Zeit, als wenn nur ein kleiner Hinterradlenkwinkel eingestellt werden soll. Daher stellt es eine weitere vorteilhafte Ausgestaltung der Erfindung dar, dass die Zeitdauer bzw. die Weglänge in Abhängigkeit von der Größe des bestimmten Soll-Lenkwinkels der Hinterräder bestimmt wird. Hierdurch kann nun auch vorteilhafterweise die Größe des Soll-Lenkwinkels berücksichtigt werden.

Ein erfindungsgemäßes Fahrerassistenzsystem zum zumindest semi-autonomen Einparken eines Kraftfahrzeugs in eine Parklücke ist dazu ausgelegt, das erfindungsgemäße Verfahren oder eine seiner Ausgestaltungen durchzuführen.

Ein erfindungsgemäßes Kraftfahrzeug umfasst das erfindungsgemäße Fahrerassistenzsystem. Das Kraftfahrzeug ist insbesondere als Personenkraftwagen ausgebildet.

Die in Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Darüber hinaus ermöglichen die im Zusammenhang mit dem erfindungsgemäßen Verfahren und seinen Ausgestaltungen genannten Verfahrensschritte die Weiterbildung des erfindungsgemäßen Fahrerassistenzsystems und des erfindungsgemäßen Kraftfahrzeugs durch weitere gegenständliche Merkmale.

Die Erfindung wird nun anhand bevorzugter Ausführungsbeispiele sowie unter Bezugnahme auf die beigefügten Zeichnungen näher erläutert.

Dabei zeigen:
- Fig. 1: eine schematische Darstellung einer Ausführungsform eines erfindungsgemäßen Kraftfahrzeugs und ein Einparkmanöver in eine Längsparklücke nach einem Verfahren gemäß einem Ausführungsbeispiel der Erfindung;
- Fig. 2: eine schematische Darstellung des Kraftfahrzeugs und ein Rückwärtseinparkmanöver in eine Querparklücke nach einem Verfahren gemäß einem Ausführungsbeispiel der Erfindung;
- Fig. 3: eine schematische Darstellung des Kraftfahrzeugs und eines Vorwärtseinparkmanövers in eine Querparklücke nach einem Verfahren gemäß einem Ausführungsbeispiel der Erfindung; und
- Fig. 4: eine schematische Darstellung des Kraftfahrzeugs und eines Vorwärtseinparkmanövers in eine Querparklücke gemäß einem weiteren Ausführungsbeispiel der Erfindung.

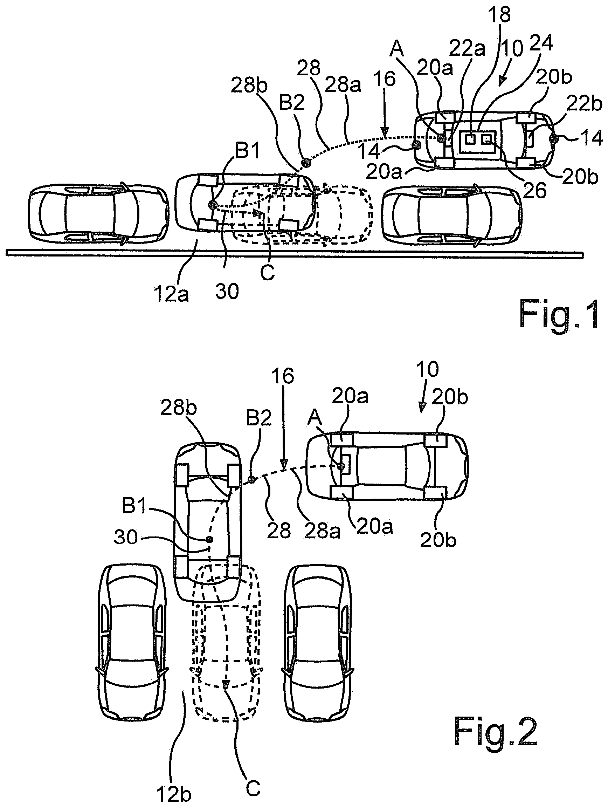

Fig. 1 zeigt eine schematische Darstellung einer Ausführungsform eines erfindungsgemäßen Kraftfahrzeugs 10 und eines Einparkmanövers in eine Längsparklücke 12a gemäß einem Ausführungsbeispiel der Erfindung. Das Einparkmanöver wird dabei semi-autonom oder vollautonom durchgeführt. Beim semi-autonomen Einparken steuert beziehungsweise regelt das Kraftfahrzeug 10 selbsttätig die Lenkung, während der Fahrer das Gaspedal und das Bremspedal bedient. Beim vollautonomen Einparken wird auch die Beschleunigung oder Verzögerung des Kraftfahrzeugs 10 während des Einparkvorgangs vom Kraftfahrzeug 10 selbst gesteuert. Um eine freie Parklücke, wie in diesem Beispiel die Längsparklücke 12a, zu detektieren, umfasst das Kraftfahrzeug 10 Umfeldsensoren 14, von denen hier exemplarisch nur zwei dargestellt sind. Die Umfeldsensoren 14 können beispielsweise als Kameras, Stereokameras, Radare, Laserscanner oder ähnliches ausgebildet sein. Weiterhin kann zum Beispiel jeweils ein Umfeldsensor 14 an einem Heck des Kraftfahrzeugs 10, an der Front des Kraftfahrzeugs 10, und an jeweils einer Längsseite des Kraftfahrzeugs 10 angeordnet sein. Mittels dieser Umfeldsensoren 14 kann das Kraftfahrzeug 10 beim Vorbeifahren an der Parklücke, in diesem Beispiel der Längsparklücke 12a, diese vermessen und bestimmen, ob ein Einparken in diese Längsparklücke 12a möglich ist oder nicht. Zusätzlich wird die vermessene Geometrie der Längsparklücke 12a zur Berechnung einer Einparktrajektorie 16 verwendet. Um diese Berechnung durchzuführen, weist das Kraftfahrzeug 10 eine Recheneinrichtung 18 auf. Weiterhin weist das Kraftfahrzeug 10 zwei Hinterräder 20a und zwei Vorderräder 20b auf. Zum Auslenken der Hinterräder 20a sowie zum Lenken der Vorderräder 20b ist jeweils eine Hinterachslenkung 22a beziehungsweise eine Vorderachslenkung 22b vorgesehen. Die Recheneinrichtung 18 kann weiterhin Teil eines Fahrerassistenzsystems 24 des Kraftfahrzeugs 10 sein, welches weiterhin eine Steuereinrichtung 26 umfasst, welche auf Basis der Berechnungen der Recheneinrichtung 18 die Hinterachslenkung 22a und die Vorderachslenkung 22b ansteuert. Die Recheneinrichtung 18 kann weiterhin eine nicht dargestellte Speichereinrichtung aufweisen, in welcher ein Kraftfahrzeugmodell, wie beispielsweise ein Einspurmodell oder ein Zweispurmodell, abgelegt ist, auf Basis welchem die Berechnung der Einparktrajektorie 16 durchgeführt wird.

Wurde nun durch die Umfeldsensoren 14 die Längsparklücke 12a erfasst, so berechnet die Recheneinrichtung 18 die Einparktrajektorie 16. Diese weist in diesem Beispiel mindestens zwei Abschnitte in Form von Zügen auf, das heißt einen ersten Abschnitt 28 und einen sich unmittelbar an den ersten Abschnitt 28 anschließenden zweiten Abschnitt 30, wobei zwischen den beiden Abschnitten 28 und 30 ein Richtungswechsel zwischen einer Rückwärtsfahrt und einer Vorwärtsfahrt des Kraftfahrzeugs 10 stattfindet. Zur Bestimmung dieser Abschnitte 28, 30 wird eine erste Zwischenposition B1 des Kraftfahrzeugs 10 auf der Einparktrajektorie 16 bestimmt. Der erste Abschnitt verläuft entsprechend dann von der Startposition A des Kraftfahrzeugs 10 bis zur Zwischenposition B1 und der zweite Abschnitt von dieser Zwischenposition B1 bis beispielsweise zu einer Endposition C. Der zweite Abschnitt 30 kann je nach Situation auch nur bis zu einer weiteren Zwischenposition verlaufen, zum Beispiel für den Fall, dass weitere Korrekturzüge bis zur Endposition C vorgesehen werden müssen. Weiterhin wird nun für die bestimmte erste Zwischenposition B1 ein Soll-Lenkwinkel für die Hinterräder 20a bestimmt, der für den weiteren Zug auf dem zweiten Abschnitt 30 optimal ist. Zum Einparken in eine Längsparklücke 12a, wie in diesem Beispiel dargestellt, kann der Einparkvorgang am effektivsten gestaltet werden, wenn die Hinterräder 20a auf den maximal einstellbaren Hinterradlenkwinkel eingestellt werden, da hierdurch der laterale Versatz des Kraftfahrzeugs 10 entlang seiner Querachse im Verhältnis zum Längsversatz des Kraftfahrzeugs 10 entlang seiner Längsachse maximal wird. Je nach Lenksystem können hierbei maximale Lenkwinkel der Hinterräder 20a zwischen 1,5 Grad und 10 Grad erreicht werden. Diese Winkelangaben beziehen sich hierbei auf die Normalstellung der Räder, in welcher die Räder 20a, 20b, wie bei einer Geradeausfahrt, parallel zur Längsachse des Kraftfahrzeugs 10 ausgerichtet sind. Bei einer Ausrichtung der Hinterräder 20a an der Zwischenposition B1 mit einem maximalen Lenkwinkel sowie durch die gleichsinnige Auslenkung der Vorderräder 20b, wodurch der sogenannte Dackellauf bereitgestellt wird, lässt sich in besonders kleine Parklücken einparken und damit die Einparkeffizienz maximieren.

Da, wie in diesem Beispiel, der zweite Abschnitt 30, der üblicherweise den sogenannten Korrekturzug darstellt, jedoch sehr kurz ist und darüber hinaus Hinterachslenkungen im Allgemeinen sehr lange brauchen, um einen Hinterradlenkwinkel einzustellen, wird üblicherweise die Effizienz eines solchen Dackellaufs stark gemindert, wenn eine derartige Einstellung erst nach Erreichen dieser Zwischenposition B1 erfolgt. Dies ist jedoch gemäß diesem Ausführungsbeispiel der Erfindung nicht der Fall, da nun vorteilhafterweise die Steuereinrichtung 26 die Hinterachslenkung 22a während des Einparkens bereits vor Erreichen der Zwischenposition B1 ansteuert, sodass die Hinterräder 20a bei Erreichen dieser ersten Zwischenposition B1 bereits ihren bestimmten Soll-Lenkwinkel, in diesem Beispiel die Vollauslenkung, erreicht haben. Um darüber hinaus die Auswirkungen der Hinterachslenkung 22a auf den ersten Abschnitt 28 der Einparktrajektorie 16 möglichst gering zu halten und insbesondere, um auch die Bewegungsplanung und -regelung zu vereinfachen, kann es weiterhin vorgesehen sein, dass ein Auslenken der Hinterräder 20a so kurz wie möglich vor Erreichen der ersten Zwischenposition B1 erfolgt. Hierzu kann beispielsweise eine zweite Zwischenposition B2 ermittelt werden, an welcher dann die Auslenkung der Hinterräder 20a durch die Hinterachslenkung 22a initiiert wird. Das heißt, das Kraftfahrzeug 10 wird entlang des ersten Abschnitts 28 bis zu dieser zweiten Zwischenposition B2 manövriert, wobei die Hinterräder 20a zum Beispiel in ihrer Normalstellung verharren oder gegensinnig zu den Vorderrädern 20b gelenkt werden, wobei dann ab dieser zweiten Zwischenposition B2 die Steuereinrichtung 26 die Hinterachslenkung 22a ansteuert, um das Auslenken der Hinterräder 20a für eine zu den Vorderrädern 20b gleichsinnige Ausrichtung der Hinterräder 20a zu starten. Dabei können die Hinterräder 20a zwischen dieser zweiten Zwischenposition B2 und der ersten Zwischenposition B1 derart gesteuert werden, dass sich der Hinterradlenkwinkel bis zum Erreichen des Soll-Lenkwinkels zum Beispiel zeitlich und/oder räumlich kontinuierlich erhöht.

Um diese zweite Zwischenposition B2 zu bestimmen, kann beispielsweise zunächst eine Zeitdauer berechnet werden, die das Lenksystem benötigt, um die Hinterräder 20a von ihrer aktuellen Stellung, zum Beispiel der Nullstellung oder jedem anderen aktuellen Lenkwinkel, auf den bestimmten Soll-Lenkwinkel auszulenken. Diese Zeitdauer ist unter anderem abhängig von den dynamischen Eigenschaften des Lenksystems sowie auch von der Größe des bestimmten Soll-Lenkwinkels.

Entsprechend kann die zweite Zwischenposition B2 derart bestimmt werden, dass die Zeitdauer zum Führen des Kraftfahrzeugs 10 von dieser zweiten Zwischenposition B2 bis zur ersten Zwischenposition B1 der berechneten Zeitdauer entspricht oder um einen vorbestimmten Wert größer ist, um sicherzustellen, dass der Sollwinkel an der Zwischenposition B1 auch sicher erreicht wird. Entsprechend teilt also diese bestimmte zweite Zwischenposition B2 den ersten Abschnitt 28 in einen ersten Teilabschnitt 28a von der Startposition A bis zur zweiten Zwischenposition B2 und in einen zweiten Teilabschnitt 28b von der zweiten Zwischenposition B2 und der ersten Zwischenposition B1.

Beim Parallelparken, das heißt beim Einparken in die Längsparklücke 12a, wird also der erste Zug von der Startposition A bis zur ersten Zwischenposition B1 ganz normal geplant, gegebenenfalls auch mit einer zu den Vorderrädern 20b gegensinnigen Auslenkung der Hinterräder 20a, aber die Hinterachslenkung 20a wird forciert um am Ende des Zuges eine Vollauslenkung in Richtung der Lücke 12a zu haben. Dabei ist es weiterhin besonders vorteilhaft, wenn der zunehmende Hinterradwinkel durch Ausregelung über die Vorderachse kompensiert wird, um einer geplanten Bahn mit Kreissegmenten und/oder Klothoiden zu folgen. Im ersten Bogen des ersten Zuges, das heißt auf dem zweiten Teilabschnitt 28b, wird die Auslenkung der Hinterräder 20a den Radius vergrößern statt verkleinern. Dennoch kann die Effizienz dieses Einparkmanövers deutlich gesteigert werden, denn wenn die Hinterachse an der Zwischenposition B1 bereits voll ausgelenkt ist, so lassen sich die größten Tiefengewinne mit dem Dackellauf erreichen. Dabei kann dann sowohl das Heck weiter in die Tiefe gezogen werden, als auch der Fahrzeugwinkel in Richtung Lücke 12a in einem einzigen Zug, das heißt dem zweiten Abschnitt 30, korrigiert werden. Mit dieser Art der Bahnplanung und Hinterachslenkungsplanung sind mehr zweizügige Parkmanöver möglich als auch eine einfachere Korrektur der Fahrzeugtiefe. So kann zum Beispiel auch bewusst die Zielposition, das heißt die erste Zwischenposition B1, in ihrer die Tiefe im ersten Zug weniger tief geplant werden, das heißt einen größeren lateralen Abstand zur Zielposition C senkrecht zur Längsausrichtung der Parklücke 12a haben, da man weiß, dass die Tiefe mittels des Dackellaufs im zweiten Zug von dieser ersten Zwischenposition B1 zur Endposition C und gegebenenfalls folgenden Zügen einfach korrigiert werden kann. Weiterer Vorteil dieser Art von Planung und Regelung mit Dackellauf ist, dass die Kollisionsabstände im Besonderen zu dem vorderen Fahrzeug reduziert werden können, das heißt insbesondere während der Fahrt auf dem ersten Abschnitt 28.

Fig. 2 zeigt eine schematische Darstellung des Kraftfahrzeugs 10 und ein Rückwärtseinparkmanöver in eine Querparklücke 12b. Das Kraftfahrzeug 10 kann dabei wie bereits zur Fig. 1 beschrieben ausgestaltet sein und entsprechende Komponenten aufweisen, wobei aus Gründen der Übersichtlichkeit in Fig. 2 lediglich die Hinterräder 20a und die Vorderräder 20b mit einem Bezugszeichen versehen sind. Auch die Vorgehensweise ist hierbei ganz analog wie zur Fig. 1 beschrieben. Das Kraftfahrzeug fährt hierbei zunächst an der Querparklücke 12b vorbei, wobei die Umfeldsensoren 14 die Geometrie der Einparksituation vermessen. Die Recheneinrichtung 18 berechnet daraufhin, ob ein Einparkvorgang möglich ist. Ist dies der Fall, so kann dies dem Fahrer entsprechend angezeigt werden. Dieser kann dann an der Startposition A den Einparkvorgang starten. Generell bezeichnet die Startposition A den Ort des Kraftfahrzeugs, an welchem das semi- oder vollautonome Parkmanöver gestartet wird. Hierzu wird wiederum von der Recheneinrichtung 18 eine Einparktrajektorie 16 ausgehend von der Startposition A berechnet, wobei weiterhin wiederum die erste Zwischenposition B1 bestimmt wird und zusätzlich für diese erste Zwischenposition B1 ein optimaler Solllenkwinkel für die Hinterräder 20a. Weiterhin optional kann wiederum eine zweite Zwischenposition B2 bestimmt werden, wie zu Fig. 1 beschrieben. Ist also die Einparktrajektorie 16, sowie die erste Zwischenposition B1, der Solllenkwinkel für die Hinterräder 20a in dieser Zwischenposition B1, sowie optional die zweite

Zwischenposition B2 berechnet, so wird das Kraftfahrzeug 10 zunächst auf dem ersten Abschnitt 28a der Trajektorie 16 bis zur zweiten Zwischenposition B2 geführt, wobei sich währenddessen die Hinterräder 20a in ihrer Normalstellung befinden. An der zweiten Zwischenposition B2 steuert die Steuereinrichtung 26 die Hinterachslenkung 22a an, um das Auslenken der Hinterräder 20a zu initiieren. Diese werden während das Fahrzeug 10 von der zweiten Zwischenposition B2 bis zur ersten Zwischenposition B1 geführt wird so angesteuert, dass diese an der ersten Zwischenposition B1 den gewünschten und für das weitere Manöver auf dem zweiten Abschnitt 30 optimalen Hinterradlenkwinkel aufweisen. Auf dem zweiten Abschnitt 30 wird das Kraftfahrzeug weiterhin bis zur Endposition C geführt, wobei auf diesem Abschnitt wiederum der Dackellauf zum Einsatz kommt und damit die Vorder- und Hinterräder 20a, 20b gleichmäßig lenken.

Bei diesem Perpendicular Parken Rückwärts, das heißt beim Rückwärtseinparken in eine Querparklücke, wird das in die Parklücke Reinfahren, das heißt von der Startposition A bis zur ersten Zwischenposition B1 ebenfalls ganz normal geplant, aber die Hinterachslenkung 22a wird weider forciert um am Ende des Reinfahrens beispielsweise wiederum eine Vollauslenkung oder einen anderen durch den Solllenkwinkel vorgegebenen Lenkwinkel nach links, das heißt in Fahrtrichtung gesehen, zu haben. Mit der bereits eingeschlagenen Hinterradlenkung 22a kann eine parallele Verschiebung, oder Ähnliches, geplant werden, welche keine Kollisionsgefahr mit dem linken Fahrzeug in Fahrtrichtung gesehen hat. Dabei kann gezielt enger an das linke Fahrzeug herangeplant werden. Mit dieser Art der Bahnplanung ist es öfter möglich beim Querparken in einem Zug zu parken, bei gleichzeitig weniger Kollisionsgefahr und damit einem größeren Sicherheitsgefühl beim Fahrer. Außerdem kann bewusst diese Art des Dackellaufs eingesetzt werden um damit ein größeres Sicherheitsgefühl beim Fahrer hervorzurufen, auch wenn es keine Verkürzung der Anzahl der Züge mit sich bringt. In diesem Beispiel ist weiterhin eine Rechtslücke als Querparklücke 12b dargestellt, wobei das hierzu beschriebene Verfahren in gleicher Weise auch zum Beispiel spiegelverkehrt ganz analog auf eine Linkslücke als Querparklücke 12b angewandt werden kann.

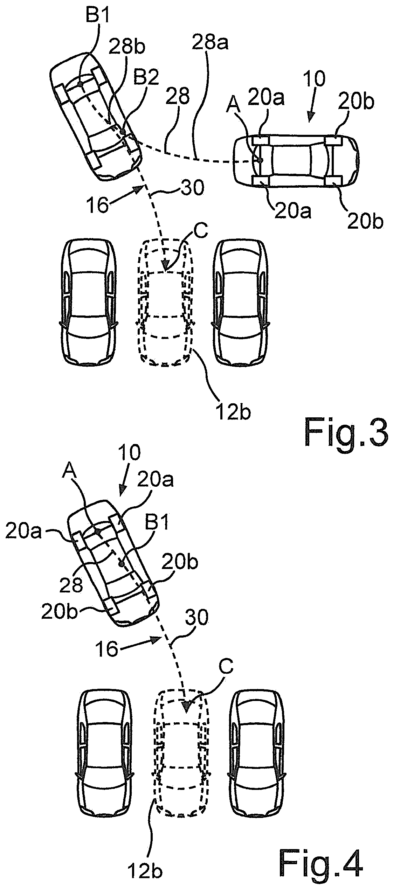

Fig. 3 zeigt eine schematische Darstellung des Kraftfahrzeugs 10 und ein Vorwärtseinparkmanöver in eine Querparklücke 12b gemäß einem Ausführungsbeispiel der Erfindung. Das Kraftfahrzeug 10 kann wiederum wie zu Fig. 1 beschrieben ausgebildet sein. Fährt also das Kraftfahrzeug 10 wiederum an der Querparklücke 12b vorbei, so erfassen die Umfeldsensoren 14 die Geometrie dieser und die Recheneinrichtung 18 bewertet, ob ein Einparkvorgang möglich ist. Ist dies der Fall, so macht das Kraftfahrzeug 10 wiederum den Fahrer darauf aufmerksam. Startet dieser in diesem Fall den Einparkvorgang an der Startposition A, so berechnet die Recheneinrichtung 18 wiederum die Einparktrajektorie 16. Auch hierbei wird weiterhin eine erste Zwischenposition B1 berechnet, sowie ein Solllenkwinkel für die Hinterräder 20a, welcher für das berechnete Manöver auf dem zweiten Abschnitt 30 der Einparktrajektorie 16 optimal ist. Anschließend wird das Kraftfahrzeug 10 auf dem ersten Abschnitt 28 der Einparktrajektorie 16 bis zur berechneten Zwischenposition B1 geführt. Hierbei steuert die Steuereinrichtung 26 wiederum die Hinterachslenkung 22a so an, dass die Hinterräder 20a von der Zwischenposition B1 den berechneten Solllenkwinkel aufweisen. Optional kann auch hier wiederum die Ansteuerung der Hinterräder 20a erst an der zweiten berechneten Zwischenposition B2 erfolgen, das heißt kurz vor Erreichen der ersten Zwischenposition B1. Somit sind die Hinterräder 20a an der ersten Zwischenposition B1 wiederum bereits in die optimale Stellung gebracht und der zweite Zug auf dem zweiten Abschnitt 30 kann wiederum besonders effektiv ausgestaltet werden. Insbesondere kommt auch wiederum beim zweiten Zug auf den zweiten Abschnitt 30 der Dackellauf zum Einsatz, wozu auch die Vorderräder 20b gleichsinnig zu den auf den Sollwinkel eingestellten Hinterrädern 20a ausgerichtet werden. Dies erlaubt eine besonders einfache Positionierung und Ausrichtung des Kraftfahrzeugs 10 in Bezug zur Querparklücke 12b. Der Dackellauf muss dabei nicht auf dem gesamten Abschnitt 30 zum Einsatz kommen, sondern beispielsweise auch nur zu Beginn dieses zweiten Abschnitts 30, bis das Kraftfahrzeug optimal zur Querparklücke 12b ausgerichtet ist, um in diese einfach einfahren zu können bis zur Endposition C.

Bei diesem Perpendicular Parken Vorwärts, das heißt beim Vorwärtseinparken in die Querparklücke 12b, ist nach dem ersten Zug an der Zwischenposition B1 die Hinterachse des Fahrzeugs 10 oft weit von der Zielposition C entfernt. Dadurch, dass die Hinterräder 20a zu Beginn des zweiten Zugs auf den zweiten Abschnitt 30 schon in Richtung der Parklücke 12b lenken, kann die Hinterachse des Fahrzeugs 10 besser in die Zielposition gelenkt werden. Das bedeutet, dass wenige Züge benötigt werden und dass der Abstand des eigenen Fahrzeugs 10 zum Fahrzeug rechts in Fahrtrichtung im zweiten Zug auf dem zweiten Abschnitt 30, das heißt von der ersten Zwischenposition B1 bis zur Endposition C, geringer sein kann, da der Abstand im Anschluss mittels Dackellauf korrigiert werden kann. Weiterhin braucht man weniger Platz vor der Parklücke 12b um vorwärts zu parken, was die Verfügbarkeit dieser Parkfunktion vergrößert. Weitere Korrekturzüge können mittels Dackellauf effektiv durchgeführt werden, beispielsweise im Anschluss an das Durchfahren des zweiten Abschnitts 30, da die Hinterachse bereits voll ausgelenkt ist oder zumindest auf den vorgegebenen Solllenkwinkel eingestellt ist, sollte sich dieser vom maximal möglichen Lenkwinkel an den Hinterrädern 20a unterscheiden. Vorzugsweise kann es auch vorgesehen sein, dass wenn die Hinterräder 20a den Solllenkwinkel, welcher für die erste Zwischenposition B1 bestimmt wurde, erreicht haben, in ihrer Auslenkung konstant gehalten werden, das heißt immer auf denselben Lenkwinkel eingestellt bleiben, bis das Kraftfahrzeug die Endposition C oder eine vorbestimmte Position definiert kurz vor dieser Endposition C erreicht hat, um die Hinterräder 20a zum Beispiel für die finale Parkposition wieder in Nullstellung zu bringen. Das heißt die Hinterräder 20a verändern ihre Auslenkung zumindest für den Großteil des zweiten Abschnitts 30 nicht, was wiederum die Bahnplanung und Regelung deutlich vereinfacht.

Fig. 4 zeigt eine schematische Darstellung des Kraftfahrzeugs 10 und ein Vorwärtseinparkmanöver in eine Querparklücke 12b gemäß einem weiteren Ausführungsbeispiel der Erfindung. Auch hier ist das Kraftfahrzeug 10 wieder bevorzugt wie zu Fig. 1 beschrieben ausgebildet. Diese in Fig. 4 dargestellte Situation verhält sich im Wesentlichen so wie zu Fig. 3 beschrieben, jedoch wurde in diesem Fall das Einparkmanöver nicht an der in Fig. 3 dargestellten Startposition A aktiviert, sondern erst in der in Fig. 3 dargestellten ersten Zwischenposition B1. Entsprechend stellt nun in Fig. 4 dies die Startposition A dar. Die Einparktrajektorie 16 wird entsprechend durch die Recheneinrichtung 18 auch nur von diesem Startpunkt A bis zum Endpunkt C berechnet. Im Startpunkt A sind dann entsprechend die Hinterräder 20a noch in ihrer Nullstellung. Wird am Startpunkt A nun der automatische Einparkvorgang gestartet, so berechnet die Recheneinrichtung 18 wiederum einen für die Zwischenposition B1 optimalen Lenkwinkel für die Hinterräder 20a und die Steuereinrichtung 26 steuert wiederum während der Fahrt auf der Trajektorie 16 die Hinterräder 20a derart an, dass diese an der Zwischenposition B1 den vorbestimmten Solllenkwinkel eingenommen haben. Weiterhin kommt hierbei wiederum der Dackellauf zum Einsatz, um das Kraftfahrzeug 10 optimal in Bezug zur Querparklücke 12b zu positionieren und in diese dann letztendlich bis zur Endposition C einzuparken. Vorzugsweise können hierbei auch wiederum in der Zwischenposition B die Hinterachsräder 20a auf Vollauslenkung gebracht sein. Dadurch wird sowohl die Trajektorie optimiert als auch ein effektiver Dackellauf für Korrekturzüge ermöglicht.

In den Fig. 1 bis 4 wurden hierbei nur exemplarisch ausgewählte Parkmanöver beschrieben, es zeigen sich die Vorteile des erfindungsgemäßen Verfahrens und seiner Ausgestaltungen in gleicher Weise bei anderen Einparkmanövern in gleicher Weise, bei denen dieses Verfahren ebenfalls angewendet werden kann. Dadurch dass die Hinterachse beim Reinfahren in die Parklücke schon eingelenkt wird, sodass das Fahrzeug danach effektiv per Dackellauf ausgerichtet werden kann, können Einparktrajektorien deutlich effektiver und auf engerem Raum geplant werden, was deutlich mehr Flexibilität bei Einparkvorgängen ermöglicht. Auch dann wenn man gegebenenfalls eine Verschlechterung, durch einen größeren Radius als ohne Hinterachslenkung, beim Reinfahren in Kauf nimmt, kann insgesamt dennoch ein Einparkmanöver mit im Schnitt deutlich weniger Zügen, insbesondere Korrekturzügen und auf engerem Raum durchgeführt werden. Zudem kann die zunehmende Hinterachseinlenkung über die Vorderachslenkung einfach ausgeregelt werden und eine besonders einfache Manöverplanung und Regelung bereitgestellt werden.

## Patentansprüche

1. Verfahren zum zumindest semi-autonomen Einparken eines Kraftfahrzeugs (10) in eine Parklücke (12a, 12b), wobei das Kraftfahrzeug (10) zwei durch eine Hinterachslenkung (22a) des Kraftfahrzeugs (10) lenkbare Hinterräder (20a) und zwei lenkbare Vorderräder (20b) aufweist, wobei ausgehend von einer Startposition (A) des Kraftfahrzeugs (10) eine Einparktrajektorie (16) bestimmt wird, die zumindest einen ersten Abschnitt (28), welcher die Startposition (A) umfasst, und einen sich an den ersten Abschnitt (28) unmittelbar anschließenden zweiten Abschnitt (30) aufweist, wobei während des Einparkens die Hinterachslenkung (22a) einen Lenkwinkel an den Hinterrädern (20a) einstellt, bevor das Kraftfahrzeug (10) den zweiten Abschnitt (30) erreicht,
wobei eine erste Zwischenposition (B1) des Kraftfahrzeugs (10) auf der Einparktrajektorie (16) bestimmt wird, die ein Ende des ersten Abschnitts (28) der Einparktrajektorie (16) und einen Beginn des zweiten Abschnitts (30) festlegt, wobei weiterhin ein Soll-Lenkwinkel der Hinterräder (20a) für die erste Zwischenposition (B1) bestimmt wird und die Hinterachslenkung (22a) den Lenkwinkel an den Hinterrädern (20a) während des Einparkens vor Erreichen der ersten Zwischenposition (B1) auf den Soll-Lenkwinkel einstellt,
wobei die Hinterachslenkung (22a) die Hinterräder (20a) während des Führens des Kraftfahrzeugs (10) entlang eines ersten Teilabschnitts (28a) des ersten Abschnitts (28) von der Startposition (A) bis zu einer zweiten Zwischenposition (B2) zumindest nicht gleichsinnig zu den Vorderrädern auslenkt und während des Führens des Kraftfahrzeugs (10) auf einem zweiten Teilabschnitt (28b) des ersten Abschnitts (28) die Hinterräder (20a) auslenkt, insbesondere gleichsinnig zu den Vorderrädern, wobei eine Weglänge bestimmt wird, die die zweite Zwischenposition (B2) festlegt, so dass die Länge der Einparktrajektorie (16) von der zweiten Zwischenposition (B2) bis zur ersten Zwischenposition (B1) die Weglänge darstellt, wobei während des Einparkens ein Auslenken der Hinterräder (20a) zum Einstellen des Soll-Lenkwinkels ab Erreichen der zweiten Zwischenposition (B2) gestartet wird,
oder
wobei eine Zeitdauer bestimmt wird, die einen bestimmten Zeitpunkt vor dem Erreichen der ersten Zwischenposition (B1) festlegt, wenn das Kraftfahrzeug (10) entlang der Einparktrajektorie (16) geführt wird, so dass eine Dauer ab dem bestimmten Zeitpunkt bis zum Erreichen der ersten Zwischenposition (B1) durch das Kraftfahrzeug (10) die bestimmte Zeitdauer darstellt, wobei während dem Einparken ein Auslenken der Hinterräder (20a) zum Einstellen des Soll-Lenkwinkels zu dem bestimmten Zeitpunkt gestartet wird,
**dadurch gekennzeichnet, dass**
die Zeitdauer oder die Weglänge in Abhängigkeit von einer gegebenen dynamischen Eigenschaft der Hinterachslenkung (22a) bestimmt wird.

2. Verfahren nach Anspruch 1
**dadurch gekennzeichnet, dass**
an der ersten Zwischenposition (B1) zwischen einer Vorwärtsfahrt des Kraftfahrzeugs (10) und einer Rückwärtsfahrt des Kraftfahrzeugs (10) gewechselt wird, insbesondere durch einen Gangwechsel zwischen einem Vorwärtsgang des Kraftfahrzeugs (10) und einem Rückwärtsgang des Kraftfahrzeugs (10).

3. Verfahren nach einem der vorhergehenden Ansprüchen,
**dadurch gekennzeichnet, dass**
wobei während des Einparkens und während einer Fahrt des Kraftfahrzeugs (10) entlang des zweiten Abschnitts (30) ein zum Lenkwinkel an den Hinterrädern (20a) gleichsinniger Lenkwinkel an den Vorderrädern (20a), insbesondere zum Ausrichten des Kraftfahrzeugs, eingestellt wird

4. Verfahren nach einem der vorhergehenden Ansprüchen,
**dadurch gekennzeichnet, dass**
im Falle einer Abweichung des Kraftfahrzeugs (10) von der Einparktrajektorie (16) während einer Fahrt des Kraftfahrzeugs (10) entlang des ersten Abschnitts (28) die Abweichung durch eine Regelung des Lenkwinkels an den Vorderrädern (20b) zumindest reduziert wird.

5. Verfahren nach einem der vorhergehenden Ansprüchen,
**dadurch gekennzeichnet, dass**
das Kraftfahrzeug (10) beim Einparken in eine Längsparklücke (12a) eingeparkt wird.

6. Verfahren nach einem der vorhergehenden Ansprüchen,
**dadurch gekennzeichnet, dass**
das Kraftfahrzeug (10) beim Einparken in eine Querparklücke (12b) rückwärts eingeparkt wird.

7. Verfahren nach einem der vorhergehenden Ansprüchen,
**dadurch gekennzeichnet, dass**
das Kraftfahrzeug (10) beim Einparken in eine Querparklücke (12b) vorwärts eingeparkt wird.

8. Verfahren nach Anspruch 7,
**dadurch gekennzeichnet, dass**
das Kraftfahrzeug (10) beim Einparken in die Querparklücke (12b) ohne einen Wechsel an der ersten Zwischenposition (B1) zwischen einer Vorwärtsfahrt des Kraftfahrzeugs (10) und einer Rückwärtsfahrt des Kraftfahrzeugs (10) vorwärts eingeparkt wird, wobei die Hinterachslenkung (22a) das Auslenken der Hinterräder (20a) in der Startposition (A) des Kraftfahrzeugs (10) initiiert.

9. Verfahren nach Anspruch 1,
**dadurch gekennzeichnet, dass**
die Zeitdauer oder die Weglänge in Abhängigkeit von der Größe des bestimmten Soll-Lenkwinkels der Hinterräder (20a) bestimmt wird.

10. Fahrerassistenzsystem (24) zum zumindest semi-autonomen Einparken eines Kraftfahrzeugs (10) in eine Parklücke (12a, 12b), wobei das Fahrerassistenzsystem (24) zum Durchführen eines Verfahrens nach einem der vorhergehenden Ansprüche ausgelegt ist.

11. Kraftfahrzeug (10) mit einem Fahrerassistenzsystem (24) nach Anspruch 10.

## Claims

1. Method for at least semi-autonomous parking of a motor vehicle (10) in a parking space (12a, 12b), the motor vehicle (10) having two steerable front wheels (20b) and two rear wheels (20a) which can be steered by way of a rear axle steering system (22a) of the motor vehicle (10), a parking trajectory (16) being determined starting from a starting position (A) of the motor vehicle (10), which parking trajectory (16) has at least one first section (28) which comprises the starting position (A) and a second section (30) which directly follows the first section (28), the rear axle steering system (22a) setting a steering angle at the rear wheels (20a) during the parking operation, before the motor vehicle (10) reaches the second section (30), a first intermediate position (B1) of the motor vehicle (10) on the parking trajectory (16) being determined, which first intermediate position (B1) defines an end of the first section (28) of the parking trajectory (16) and a beginning of the second section (30), a setpoint steering angle of the rear wheels (20a) being determined for the first intermediate position (B1), furthermore, and the rear axle steering system (22a) setting the steering angle at the rear wheels (20a) to the setpoint steering angle during the parking operation before the first intermediate position (B1) is reached, the rear axle steering system (22a) deflecting the rear wheels (20a) at least not in the same direction as the front wheels during the driving of the motor vehicle (10) along a first part section (28a) of the first section (28) from the starting position (A) as far as a second intermediate position (B2), and deflecting the rear wheels (20a), in particular in the same direction as the front wheels, during the driving of the motor vehicle (10) on a second part section (28b) of the first section (28), a path length being determined which fixes the second intermediate position (B2), with the result the length of the parking trajectory (16) from the second intermediate position (B2) as far as the first intermediate position (B1) represents the path length, a deflection of the rear wheels (20a) for setting the setpoint steering angle being started during the parking operation from the second intermediate position (B2) being reached, or a time duration being determined which fixes a certain time before the first intermediate position (B1) is reached, when the motor vehicle (10) is driven along the parking trajectory (16), with the result that a duration from the defined time until the first intermediate position (B1) is reached by way of the motor vehicle (10) represents the defined time duration, a deflection of the rear wheels (20a) for setting the setpoint steering angle being started during the parking operation at the defined time, **characterized in that** the time duration or the path length is determined in a manner which is dependent on a given dynamic property of the rear axle steering system (22a).

2. Method according to Claim 1, **characterized in that** a change is carried out at the first intermediate position (B1) between forward driving of the motor vehicle (10) and reverse driving of the motor vehicle (10), in particular by way of a gear change between a forward gear of the motor vehicle (10) and a reverse gear of the motor vehicle (10).

3. Method according to either of the preceding claims, **characterized in that** a steering angle which is in the same direction as the steering angle at the rear wheels (20a) being set at the front wheels (20a) during the parking operation and during driving of the motor vehicle (10) along the second section (30), in particular in order to orient the motor vehicle.

4. Method according to one of the preceding claims, **characterized in that**, in the case of a deviation of the motor vehicle (10) from the parking trajectory (16) during driving of the motor vehicle (10) along the first section (28), the deviation is at least reduced by way of a regulation of the steering angle at the front wheels (20b).

5. Method according to one of the preceding claims, **characterized in that**, in the case of the parking operation, the motor vehicle (10) is parked into a parallel parking space (12a).

6. Method according to one of the preceding claims, **characterized in that**, in the case of the parking operation, the motor vehicle (10) is parked backwards into a perpendicular parking space (12b).

7. Method according to one of the preceding claims, **characterized in that**, in the case of the parking operation, the motor vehicle (10) is parked forwards into a perpendicular parking space (12b).

8. Method according to Claim 7, **characterized in that**, in the case of parking into the perpendicular parking space (12b), the motor vehicle (10) is parked forwards without a change at the first intermediate position (B1) between forward driving of the motor vehicle (10) and reverse driving of the motor vehicle (10), the rear axle steering system (22a) initiating the deflection of the rear wheels (20a) in the starting position (A) of the motor vehicle (10).

9. Method according to Claim 1, **characterized in that** the time duration or the path length is determined in a manner which is dependent on the magnitude of the defined setpoint steering angle of the rear wheels (20a).

10. Driver assistance system (24) for at least semi-autonomous parking of a motor vehicle (10) into a parking space (12a, 12b), the driver assistance system (24) being designed to carry out a method according to one of the preceding claims.

11. Motor vehicle (10) with a driver assistance system (24) according to Claim 10.

## Revendications

1. Procédé de stationnement au moins semi-automatique d'un véhicule automobile (10) dans un espace de stationnement (12a, 12b), le véhicule automobile (10) présentant deux roues arrière (20a) dirigeables par une direction d'essieu arrière (22a) du véhicule automobile (10) et deux roues avant dirigeables (20b), une trajectoire de stationnement (16) étant déterminée à partir d'une position initiale (A) du véhicule automobile (10), laquelle comprend au moins une première section (28) qui comprend la position initiale (A) et une deuxième section (30) se raccordant directement à la première section (28), la direction d'essieu arrière (22a) ajustant un angle de direction au niveau des roues arrière (20a) pendant le stationnement, avant que le véhicule automobile (10) n'atteigne la deuxième section (30), une première position intermédiaire (B1) du véhicule automobile (10) étant déterminée sur la trajectoire de stationnement (16), laquelle définit une fin de la première section (28) de la trajectoire de stationnement (16) et un début de la deuxième section (30), un angle de direction de consigne des roues arrière (20a) pour la première position intermédiaire (B1) étant en outre déterminé et la direction d'essieu arrière (22a) ajustant l'angle de direction à l'angle de direction de consigne au niveau des roues arrière (20a) pendant le stationnement, avant que la première position intermédiaire (B1) ne soit atteinte,
la direction d'essieu arrière (22a) déviant les roues arrière (20a) pendant le guidage du véhicule automobile (10) le long d'une première section partielle (28a) de la première section (28) de la position initiale (A) jusqu'à une deuxième position intermédiaire (B2) au moins pas dans le même sens que les roues avant et déviant les roues arrière (20a) pendant le guidage du véhicule automobile (10) sur une deuxième section partielle (28b) de la première section (28), en particulier dans le même sens que les roues avant, une longueur de course étant déterminée, laquelle définit la deuxième position intermédiaire (B2), de telle sorte que la longueur de la trajectoire de stationnement (16) de la deuxième position intermédiaire (B2) jusqu'à la première position intermédiaire (B1) constitue la longueur de course, une déviation des roues arrière (20a) étant amorcée pendant le stationnement pour l'ajustement de l'angle de direction de consigne à partir du moment où la deuxième position intermédiaire (B2) est atteinte, ou
une durée étant déterminée, laquelle définit un instant déterminé avant que la première position intermédiaire (B1) ne soit atteinte, lorsque le véhicule automobile (10) est guidé le long de la trajectoire de stationnement (16), de telle sorte qu'une durée à partir de l'instant déterminé jusqu'à ce que la première position intermédiaire (B1) soit atteinte par le véhicule automobile (10) constitue la durée déterminée, une déviation des roues arrière (20a) pour l'ajustement de l'angle de direction de consigne étant amorcée pendant le stationnement jusqu'à l'instant déterminé,
**caractérisé en ce que**
la durée ou la longueur de course est déterminée en fonction d'une propriété dynamique donnée de la direction d'essieu arrière (22a).

2. Procédé selon la revendication 1,
**caractérisé en ce que**
l'on alterne entre une conduite de marche avant du véhicule automobile (10) et une conduite de marche arrière du véhicule automobile (10) au niveau de la première position intermédiaire (B1), en particulier par un changement de vitesses entre une vitesse de marche avant du véhicule automobile (10) et une vitesse de marche arrière du véhicule automobile (10).

3. Procédé selon l'une quelconque des revendications précédentes,
**caractérisé en ce que**
pendant le stationnement et pendant une conduite du véhicule automobile (10) le long de la deuxième section (30), un angle de direction au niveau des roues avant (20a), dans le même sens que l'angle de direction au niveau des roues arrière (20a) étant ajusté, en particulier pour orienter le véhicule automobile.

4. Procédé selon l'une quelconque des revendications précédentes,
**caractérisé en ce que**
dans le cas d'un écart du véhicule automobile (10) par rapport à la trajectoire de stationnement (16) pendant une conduite du véhicule automobile (10) le long de la première section (28), l'écart est au moins réduit par une régulation de l'angle de direction au niveau des roues avant (20b).

5. Procédé selon l'une quelconque des revendications précédentes,
**caractérisé en ce que**
le véhicule automobile (10) est stationné lors du stationnement dans un espace de stationnement longitudinal (12a).

6. Procédé selon l'une quelconque des revendications précédentes,
**caractérisé en ce que**
le véhicule automobile (10) est stationné en marche arrière lors du stationnement dans un espace de stationnement transversal (12b).

7. Procédé selon l'une quelconque des revendications précédentes,
**caractérisé en ce que**
le véhicule automobile (10), lors du stationnement dans un espace de stationnement transversal (12b), est stationné en marche avant.

8. Procédé selon la revendication 7,
**caractérisé en ce que**
le véhicule automobile (10), lors du stationnement dans l'espace de stationnement transversal (12b) est stationné vers l'avant sans passage au niveau de la première position intermédiaire (B1) d'une conduite en marche avant du véhicule automobile (10) à une conduite en marche arrière du véhicule automobile (10), la direction d'essieu arrière (22a) amorçant la déviation des roues arrière (20a) dans la position initiale (A) du véhicule automobile (10).

9. Procédé selon la revendication 1,
**caractérisé en ce que**
la durée ou la longueur de course est déterminée en fonction de la valeur de l'angle de direction de consigne déterminé des roues arrière (20a).

10. Système d'assistance à la conduite (24) pour le stationnement au moins semi-automatique d'un véhicule automobile (10) dans un espace de stationnement (12a, 12b), le système d'assistance à la conduite (24) étant conçu pour mettre en œuvre un procédé selon l'une quelconque des revendications précédentes.

11. Véhicule automobile (10) comprenant un système d'assistance à la conduite (24) selon la revendication 10.
